# FASCICULE DE BREVET EUROPEEN

(11) **EP 3 099 463 B1**
(45) Date de publication et mention de la délivrance du brevet: **08.08.2018**
(21) Numéro de dépôt: 15708251.2
(22) Date de dépôt: 27.01.2015
(51) Int. Cl.: B29C 45/40

(54) **MOULE, EN PARTICULIER MOULE D'INJECTION, ET PROCÉDÉ DE MOULAGE PAR INJECTION UTILISANT UN TEL MOULE.**
FORM, INSBESONDERE SPRITZGUSSFORM, UND SPRITZGUSSVERFAHREN UNTER VERWENDUNG SOLCH EINER FORM
MOULD, PARTICULARLY INJECTION MOULD, AND INJECTION MOULDING METHOD USING SUCH A MOULD

(30) Priorité: 29.01.2014 US 201461932843 P; 17.03.2014 FR 1452174
(43) Date de publication de la demande: 07.12.2016
(73) Titulaire: Safran Aircraft Engines, 75015 Paris (FR)
(72) Inventeur: JAUSSAUD, Raoul, F-77550 Moissy-Cramayel Cedex (FR); TECHER, Marc-Emmanuel, F-77550 Moissy-Cramayel Cedex (FR); NORD, Richard, Stratford, New Hampshire 03884 (US)
(74) Mandataire: Intès, Didier Gérard André
(86) Numéro de dépôt international: PCT/FR2015/050186
(87) Numéro de publication internationale: WO 2015/114246

(56) Documents cités:
- DE-A1-102011 007 997
- DE-U1-202011 104 237
- FR-A1- 2 791 596
- JP-A- S61 152 421
- JP-U- S56 146 521
- US-A- 4 118 168
- US-A- 4 963 087
- US-A1- 2011 121 490
- US-A1- 2013 014 887
- US-A1- 2013 221 574
- US-B1- 6 491 508

## Description

### DOMAINE DE L'INVENTION

Le présent exposé concerne un moule, plus particulièrement un moule comprenant une pluralité de blocs, notamment pour moulage à injection, et un procédé de moulage utilisant un tel moule.

### ARRIÈRE-PLAN

On connaît des moules, en particulier des moules d'injection, formés d'une pluralité de blocs définissant, en position assemblée, une cavité de moulage. De tels moules sont notamment utilisés pour le moulage par injection, par exemple pour le moulage par injection d'aubes de turbomachines. La cavité de moulage, fermée, définit la forme de la pièce à mouler. L'injection est souvent effectuée à haute température, auquel cas, à la fin de l'injection, la température du moule est diminuée afin de démouler la pièce dans des conditions optimales et respecter ses propriétés. Cependant, la pièce et les blocs du moule étant constitués de matériaux différents (par exemple blocs en métal et pièce en carbone), il se produit une dilatation différentielle qui peut avoir pour effet de coincer la pièce dans le moule. Le document US 6,491,508 divulgue un tel moule.

De plus, lorsqu'on ouvre la cavité de moulage en séparant au moins un bloc du moule du reste du moule, la pièce subit un refroidissement non uniforme dû à la différence de température entre l'air de l'atelier, en contact avec une partie de la pièce, et les blocs restants du moule, en contact avec l'autre partie de la pièce. Ce gradient de température crée des contraintes résiduelles dans la pièce. Ces contraintes résiduelles sont d'autant plus importantes que le temps de démoulage est long. Il est donc nécessaire de prévoir des méthodes particulières ou des outils adaptés pour décoincer et sortir rapidement la pièce du moule.

Une solution connue au problème du démoulage consiste à prévoir un moule comprenant de nombreux blocs, et d'enlever un à un ces blocs jusqu'à dégager complètement la pièce. Une telle solution est longue à mettre en oeuvre et nécessite généralement des manipulations (rotations, renversements, basculements, etc.) du moule, ce qui peut s'avérer complexe dès lors que le moule dépasse une certaine taille ou que sa température est relativement élevée.

Une autre solution connue consiste à utiliser un outil externe pour appliquer un effort sur la pièce et la désolidariser du moule, par exemple des cales ou un pied de biche. D'une part, l'effort à exercer est relativement important et d'autre part, une telle technique endommage souvent la pièce moulée, notamment en laissant des marques sur la pièce.

Une amélioration de cette solution consiste à ménager un trou traversant fin dans un bloc du moule, le trou traversant reliant alors la cavité de moulage à l'extérieur du moule. Ce trou est temporairement bouché avant et pendant le moulage, généralement par une vis et une résine de type silicone à vulcanisation à la température ambiante (en anglais « Room Temperature Vulcanisation », RTV). A l'issue de l'injection, on ouvre le moule en séparant au moins un bloc du moule du reste du moule, on retire la résine RTV et on insère une tige dans le trou traversant, par l'extérieur, afin d'exercer un effort sur la pièce pour la désolidariser du moule. Toutefois, cette méthode possède les inconvénients déjà mentionnés à propos de l'utilisation d'un outil externe. De plus, l'étanchéité fournie par la résine RTV présente une fiabilité limitée et il arrive que la matière injectée dans le moule pousse la résine et sorte par le trou traversant lors du moulage. Ainsi, une telle solution n'est pas satisfaisante. Il existe donc un besoin pour un nouveau type de moule.

### PRÉSENTATION DE L'INVENTION

Le but de la présente invention est de remédier au moins substantiellement aux inconvénients mentionnés ci-dessus. Ce but est atteint grâce à un moule selon la revendication 1. En particulier, le moule comprend au moins un poussoir, ledit poussoir étant configuré pour être logé dans un premier bloc de ladite pluralité, d'un côté donnant sur la cavité de moulage, et pour présenter une première surface affleurant à la cavité de moulage lorsque le poussoir est logé dans ledit premier bloc, et en ce que le moule comprend en outre des moyens d'actionnement permettant la mise en mouvement du poussoir par rapport au premier bloc, et des moyens d'étanchéité configurés pour isoler les moyens d'actionnement de la cavité de moulage.

Un poussoir désigne une pièce capable de transmettre une poussée. Le poussoir a une première surface affleurant à la cavité de moulage pour être, après moulage, en contact direct avec la pièce moulée. La première surface du poussoir épouse donc la forme de la cavité de moulage, c'est-à-dire le négatif de la forme de la pièce. Le poussoir est ainsi apte à transmettre une poussée à la pièce, laquelle poussée crée un effet de levier pour désolidariser la pièce du moule. Pour transmettre une poussée, le poussoir est monté mobile dans le premier bloc. En particulier, le poussoir peut être mobile selon une direction.

De plus, la première surface du poussoir peut être dimensionnée de taille arbitrairement grande. Plus la première surface est grande, plus l'effort à appliquer pour décoincer la pièce du premier bloc sera faible.

Les moyens d'actionnement permettent la mise en mouvement du poussoir. Il peut s'agir de moyens d'actionnement dont la sollicitation entraîne directement le poussoir ou de moyens d'actionnement facilitant l'utilisation des moyens externes pour mettre en mouvement le poussoir. Par exemple, les moyens d'actionnement peuvent comprendre une vis dont la rotation met en mouvement le poussoir. Selon un autre exemple, les moyens d'actionnement peuvent comprendre un renfoncement permettant d'engager un outil pour mettre en mouvement le poussoir.

Afin d'éviter que de la matière de moulage n'atteigne les moyens d'actionnement et ne les obstrue ou ne les rendent inutilisables, les moyens d'étanchéité sont prévus pour isoler les moyens d'actionnement de la cavité de moulage qui est apte à recevoir la matière de moulage. Les moyens d'actionnement sont ainsi protégés de manière fiable pendant l'ensemble du processus de moulage, notamment lorsque les blocs sont en position assemblée.

Grâce au moule selon l'invention, le démoulage peut être effectué de manière simple et rapide, ce qui permet de ne pas endommager la pièce et de minimiser les contraintes résiduelles dues au refroidissement. De plus, grâce aux moyens d'étanchéité, le fait de prévoir des moyens d'actionnement pour le poussoir n'a pas d'impact sur la bonne étanchéité du moule et de la cavité de moulage. La fabrication de pièces de géométrie complexes, plus difficiles à démouler, bénéficie en particulier de ce nouveau type de moules.

Dans certains modes de réalisation, les moyens d'étanchéité sont placés autour des moyens d'actionnement. Ainsi, les moyens d'actionnement sont protégés de l'infiltration de matière de moulage et ils restent opérationnels pour le démoulage.

Dans certains modes de réalisation, les moyens d'étanchéité sont prévus sur une surface ne donnant pas sur la cavité de moulage. Dans ces modes de réalisation, les moyens d'étanchéité peuvent être prévus sur une surface d'un bloc ne donnant pas sur la cavité de moulage et/ou sur une surface du poussoir ne donnant pas sur la cavité de moulage. En particulier, les moyens d'étanchéité peuvent être compris entre une surface du poussoir et une surface d'un bloc. Ainsi, il est possible de prévoir des moyens d'étanchéité linéiques (tels qu'un joint) et non surfaciques (tels qu'une membrane), ce qui diminue les risques de rupture ou de défaut des moyens d'étanchéité.

Dans certains modes de réalisation, les moyens d'actionnement sont accessibles du côté donnant sur la cavité de moulage. Par conséquent, lorsque les blocs sont assemblés en position définissant la cavité de moulage, les moyens d'actionnement peuvent n'être pas accessibles. Ceci empêche notamment une mise en mouvement du poussoir tant que le moule est fermé, ce qui garantit le maintien de la forme de la cavité de moulage lors du moulage.

Dans certains modes de réalisation, le poussoir comporte un filetage et les moyens d'actionnement comprennent une vis engagée dans ledit filetage. Dans de tels modes de réalisation, le poussoir peut donc être mis en translation par rotation de la vis. De tels moyens d'actionnement sont simples à fabriquer et à utiliser.

Lorsque les blocs sont en position assemblée, une deuxième surface dudit poussoir est en contact avec un deuxième bloc différent du premier bloc. Ceci peut être fait de sorte que le deuxième bloc empêche le mouvement du poussoir par rapport au premier bloc. Ainsi, lorsque les blocs sont en position assemblée, le poussoir peut être maintenu en position par le deuxième bloc. Il en résulte que la fiabilité du contrôle de la position du poussoir est accrue.

En particulier, dans certains modes de réalisation, la deuxième surface n'est pas parallèle à la direction dans laquelle le poussoir est mobile, de sorte que lorsque les blocs du moule sont en position assemblée, le poussoir est enserré entre le premier bloc et le deuxième bloc.

Les moyens d'actionnement sont accessibles par ladite deuxième surface du poussoir. Ainsi, les moyens d'actionnement sont accessibles par une surface qui, lorsque les blocs sont en position assemblée, est en contact avec le deuxième bloc. Les moyens d'actionnement ne sont donc pas accessibles pendant tant que le premier bloc et le deuxième bloc sont en position assemblée. Tout mouvement intempestif du poussoir est ainsi empêché, notamment pendant le moulage.

Dans certains modes de réalisation, les moyens d'étanchéité comprennent un joint torique configuré pour être disposé entre le poussoir et un bloc de ladite pluralité. En particulier, le joint torique peut être disposé entre le poussoir et le premier bloc ou entre le poussoir et un autre bloc, notamment le deuxième bloc. L'utilisation de composants standards tels qu'un joint torique permet de diminuer les coûts d'un moule selon ces modes de réalisation.

Le présent exposé concerne également un procédé de fabrication d'une pièce par moulage par injection tel que défini à la revendication 6. Ce procédé comprend les étapes suivantes :
- on fournit un moule comprenant une pluralité de blocs définissant, en position assemblée, une cavité de moulage, le moule comprenant au moins un poussoir, ledit poussoir étant logé dans un premier bloc de ladite pluralité, d'un côté donnant sur la cavité de moulage, et présentant une première surface affleurant à la cavité de moulage, le moule comprenant en outre des moyens d'actionnement permettant la mise en mouvement du poussoir par rapport au bloc dans lequel il est logé, et des moyens d'étanchéité isolant les moyens d'actionnement de la cavité de moulage dans lequel, lorsque les blocs sont en position assemblée, une deuxième surface dudit poussoir est en contact avec un deuxième bloc différent du premier bloc et dans lequel les moyens d'actionnement sont accessibles par ladite deuxième surface du poussoir;
- on injecte un matériau dans la cavité de moulage pour former la pièce ;
- on ouvre la cavité de moulage en séparant au moins un bloc de ladite pluralité, différent du premier bloc, du reste du moule ;
- on actionne les moyens d'actionnement, ce par quoi le poussoir est mis en mouvement par rapport au premier bloc et le poussoir exerce un effort sur la pièce pour séparer la pièce du moule.

Grâce à un tel procédé, le démoulage de la pièce est particulièrement simple et rapide, ce qui permet de diminuer les contraintes résiduelles dans la pièce moulée et d'accélérer le processus de fabrication utilisant un tel moule.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente en perspective un premier bloc dans lequel est logé un poussoir ;
- la figure 2 est un schéma en coupe du moule selon le mode de réalisation de la figure 1 ;
- la figure 3 représente en vue de dessus le premier bloc de la figure 1, contenant de plus une pièce moulée.

### DESCRIPTION DÉTAILLÉE DE L'INVENTION

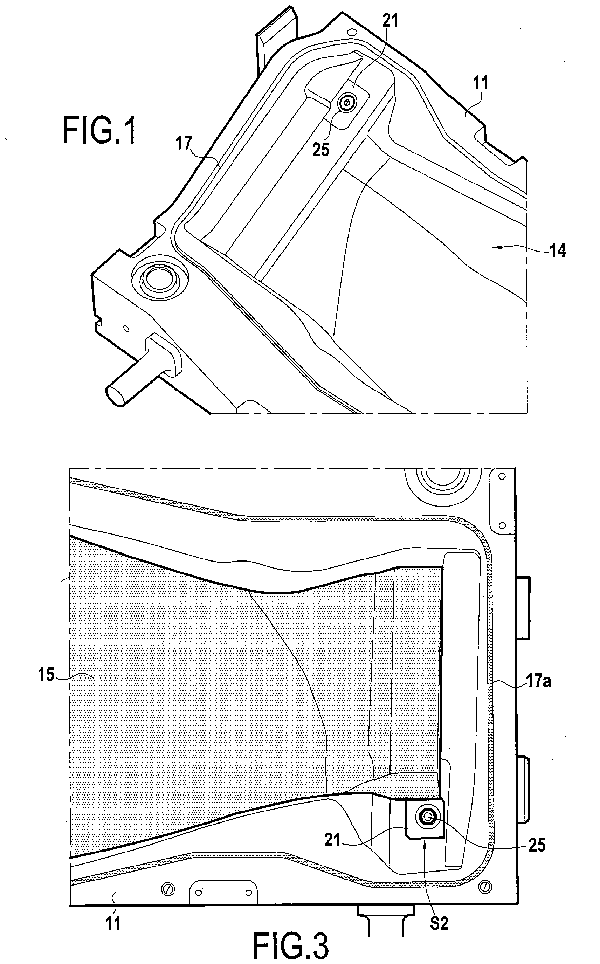

La figure 1 représente en perspective un premier bloc 11 d'un moule 10. Dans le présent mode de réalisation, le moule 10 est conçu pour mouler par injection une aube de turbomachine en matériau composite. Le moule 10 comprend ici deux blocs 11, 13, mais pourrait en comprendre davantage. Des systèmes d'assemblage de blocs de moule étant bien connus de l'homme du métier, de tels systèmes ne seront pas décrits dans cet exposé. Les blocs 11, 13 formant le moule 10 définissent, en position assemblée, une cavité de moulage 14 ayant la forme de la pièce à mouler (aux chutes éventuelles près), soit ici la forme d'une aube.

Autour de la cavité de moulage 14 est ménagée une gorge 17 prévue pour accueillir un joint 17a. Le joint 17a est destiné à se trouver entre le premier bloc 11 et le deuxième bloc 13. Le joint 17a assure l'étanchéité de la cavité de moulage 14 lorsque le premier bloc 11 et le deuxième bloc 13 sont assemblés.

Dans le premier bloc 11 est aménagé un logement 20 dans lequel est disposé un poussoir 21. Le poussoir 21 est de forme complémentaire à celle du logement 20. Le poussoir 21 est logé d'un côté donnant sur la cavité de moulage 14, c'est-à-dire que le poussoir 21 possède une première surface S1 donnant sur la cavité de moulage 14. De plus, la première surface S1 affleure à la cavité de moulage 14.

Le poussoir 21 est monté mobile dans le premier bloc 11. Plus précisément, le poussoir 21 est mobile entre une position escamotée, dans laquelle le poussoir 21 est complètement dans le logement 20 et affleure à la cavité de moulage 14, et une position partiellement extraite, dans laquelle le poussoir 21 est en saillie par rapport à la cavité de moulage 14. En guise de moyens d'actionnement du poussoir 21, une vis 25 est prévue dans un perçage 22 du poussoir 21, le perçage 22 comportant un taraudage 23. Le perçage 22 comporte, de plus, un lamage (ou chambrage) 22a disposé du côté de la cavité 14 et recevant la tête de la vis 25. Comme on le verra plus en détail par la suite, le mouvement de rotation de la vis 25 permet d'éloigner et de rapprocher le poussoir 21 du premier bloc 11, en particulier de translater le poussoir 21 dans la direction de la vis 25, entre la position escamotée et la position partiellement extraite.

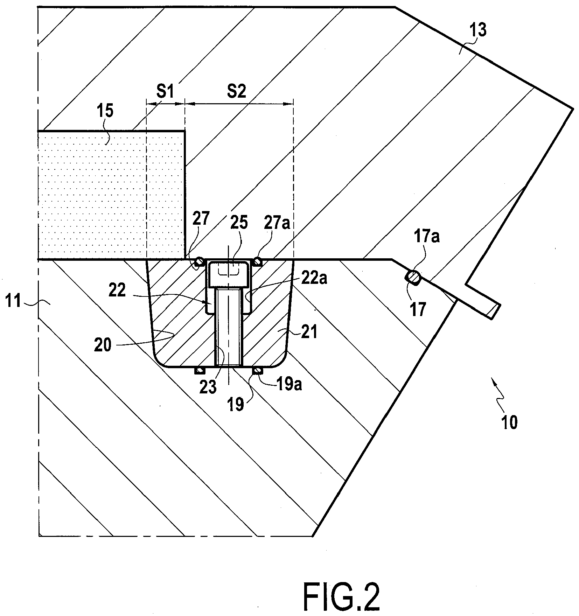

Pour procéder au moulage d'une pièce, notamment d'une aube de turbomachine, on assemble le premier bloc 11 avec le deuxième bloc 13 du moule 10, puis on injecte de la matière de moulage par au moins un orifice d'injection (non représenté) du moule 10. Notamment dans le cas d'un moulage par injection d'une aube de turbomachine, il est possible d'insérer dans la cavité de moulage 14, avant de fermer le moule 10 préalablement à l'injection, une préforme, notamment une préforme tissée. A l'issue de l'injection, le moule 10 encore fermé est tel que représenté sur la figure 2, qui est une vue partielle en coupe du moule 10.

Sur la figure 2, le premier bloc 11 et le deuxième bloc 13 sont assemblés et définissent la cavité de moulage 14 qui est désormais remplie par la pièce moulée 15. Comme on l'a vu précédemment, le joint 17a logé dans la gorge 17 fait office de moyens d'étanchéité pour l'étanchéité de la cavité de moulage 14 à la jonction entre les différents blocs 11, 13 du moule 10.

Le poussoir 21 est logé dans le premier bloc 11 de façon à ce que la première surface S1 du poussoir 21 donne sur la cavité de moulage 14, c'est-à-dire de façon à ce que la première surface S1 soit en contact direct avec la pièce moulée 15. La première surface S1 est destinée à exercer un effort sur la pièce 15, de façon à désolidariser la pièce 15 du premier bloc 11 lorsque le poussoir 21 est mû.

Le poussoir 21 est également logé dans le premier bloc 11 de façon à ce qu'en position assemblée, le poussoir 21 comporte une deuxième surface S2 en contact avec un bloc du moule 10 différent du premier bloc 11; comme on peut le voir sur la figure 2, dans le cas présent, la deuxième surface S2 est en contact avec le deuxième bloc 13. La deuxième surface S2 est destinée à empêcher tout mouvement du poussoir 21 tant que le deuxième bloc 13 est assemblé au premier bloc 11.

Comme indiqué précédemment, afin d'éviter que de la matière de moulage n'atteigne les moyens d'actionnement du poussoir 21 et ne les obstrue ou ne les rende inutilisables, des moyens d'étanchéité sont prévus pour isoler les moyens d'actionnement 23, 25 de la cavité de moulage 14 qui reçoit la matière de moulage. En effet, la matière de moulage peut a priori s'engouffrer dans tous les interstices entre les différentes parties du moule 10 ; par exemple, dans le cas d'injection de résine époxy comme matière de moulage, la résine pénètre dans tous les interstices de taille supérieure ou égale à 0,2 mm.

En l'espèce, le poussoir 21 est muni d'une gorge 27 entourant le perçage 22 du côté donnant sur le deuxième bloc 13. En l'espèce, la gorge 27 entoure le lamage 22a. Un joint torique 27a est placé dans la gorge 27 pour assurer l'étanchéité entre la cavité de moulage 14 et le perçage 22, à la jonction entre le poussoir 21 et le deuxième bloc 13. De manière complémentaire, le premier bloc 11 est muni d'une gorge 19 entourant le perçage 22 taraudé du côté donnant sur le poussoir 21. Un joint torique 19a est placé dans la gorge 19 pour assurer l'étanchéité entre la cavité de moulage 14 et le perçage 22 taraudé, à la jonction entre le poussoir 21 et le premier bloc 11. Ainsi, le perçage 22 taraudé et lamé est isolé, à chacune de ses extrémités, de la cavité de moulage, ce qui assure l'intégrité du taraudage 23 et de la vis 25. De plus, il ressort que les moyens d'étanchéité 19, 27 sont prévus sur une surface ne donnant pas sur la cavité de moulage 14.

Comme on peut le voir sur la figure 2, les moyens d'actionnement du poussoir 21, notamment la tête de la vis 25, sont accessibles par la deuxième surface S2. Ainsi, tant que le deuxième bloc 13 est en contact avec la deuxième surface S2, les moyens d'actionnement ne sont pas accessibles.

Pour démouler la pièce 15, après que la pièce 15 a suffisamment refroidi, on ouvre le moule 10 en séparant le deuxième bloc 13 du premier bloc 11. Le moule 10 et la pièce 15 se trouvent donc dans la configuration présentée sur la figure 3. La pièce 15, du fait du refroidissement différentiel entre les blocs 11, 13 et la pièce 15, est bloquée dans le premier bloc 11. Le deuxième bloc 13 ayant été retiré, la deuxième surface S2 et donc les moyens d'actionnement, notamment la tête de la vis 25, sont à nouveau accessibles.

Pour désolidariser la pièce 15 du premier bloc 11, on met en rotation (manuellement ou automatiquement) la vis 25. La translation de la vis 25 étant arrêtée par le premier bloc 11 (voir figure 2), la rotation de la vis 25 entraîne, par le biais du taraudage 23, la translation du poussoir 21 dans un sens l'éloignant du premier bloc 11, c'est-à-dire dans un sens exerçant un effort sur la pièce 15. Le poussoir 21 permet donc d'exercer, via la première surface S1 de contact entre le poussoir 21 et la pièce 15, une poussée sur la pièce 15. La vis 25 est ainsi tournée jusqu'à ce que la pièce 15 se détache du premier bloc 11. Plus la surface S1 est étendue, plus l'effort à appliquer sera faible, ce qui permet de diminuer les risques de marquage de la pièce 15.

Par rapport au mode de réalisation présenté, l'expérience a montré que le pied d'une aube était particulièrement difficile à démouler, c'est pourquoi le moule 10 comporte un seul poussoir 21 placé près du pied de l'aube 15. Toutefois, il va de soi que le nombre et l'emplacement des poussoirs peuvent être adaptés par l'homme du métier, en considérant toutefois que chaque poussoir ajouté dans un bloc du moule nécessite des moyens d'étanchéité, par exemple des joints toriques, et que ces moyens d'étanchéité sont une source de défaillance pour le processus de moulage. D'autre part, de préférence, le nombre et la position des poussoirs sont optimisés pour minimiser les contraintes induites dans la pièce par l'opération de démoulage.

Par ailleurs, l'utilisation d'un moule selon l'invention n'est pas incompatible avec d'autres moyens ou aides de démoulage, par exemple l'application sur le moule d'un enduit visant à diminuer l'adhérence entre la pièce moulée et les parois des blocs du moule formant la cavité.

En outre, les moyens d'actionnement ne se limitent pas à la configuration présentée à la figure 2. Beaucoup de moyens connus permettraient de mettre en mouvement le poussoir de manière équivalente à celle qui a été présentée, que ces moyens fassent ou non appel à une vis ou une tige filetée coopérant avec un perçage taraudé.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Moule (10), en particulier moule d'injection, comprenant une pluralité de blocs (11, 13) définissant, en position assemblée, une cavité de moulage (14), et au moins un poussoir (21), ledit poussoir (21) étant configuré pour être logé dans un premier bloc (11) de ladite pluralité, d'un côté donnant sur la cavité de moulage (14), et pour présenter une première surface (S1) affleurant à la cavité de moulage (14) lorsque le poussoir (21) est logé dans ledit premier bloc (11), dans lequel le moule (10) comprend en outre des moyens d'actionnement (23, 25) permettant la mise en mouvement du poussoir (21) par rapport au premier bloc (11), et des moyens d'étanchéité (19, 27) configurés pour isoler les moyens d'actionnement (23, 25) de la cavité de moulage (14), dans lequel, lorsque les blocs (11, 13) sont en position assemblée, une deuxième surface (S2) dudit poussoir est en contact avec un deuxième bloc (13) différent du premier bloc (11) et les moyens d'actionnement (23, 25) sont accessibles par ladite deuxième surface (S2) du poussoir.

2. Moule selon la revendication 1, dans lequel les moyens d'étanchéité (19, 27) sont prévus sur une surface ne donnant pas sur la cavité de moulage (14).

3. Moule selon la revendication 1 ou 2, dans lequel les moyens d'actionnement (23, 25) sont accessibles du côté donnant sur la cavité de moulage.

4. Moule selon l'une quelconque des revendications 1 à 3, dans lequel le poussoir (21) comporte un filetage (23) et les moyens d'actionnement comprennent une vis (25) engagée dans ledit filetage.

5. Moule selon l'une quelconque des revendications 1 à 4, dans lequel les moyens d'étanchéité (19, 27) comprennent un joint torique configuré pour être disposé entre le poussoir (21) et un bloc (11, 13) de ladite pluralité.

6. Procédé de fabrication d'une pièce (15) par moulage par injection, comprenant les étapes suivantes :
- fournir un moule (10) comprenant une pluralité de blocs (11, 13) définissant, en position assemblée, une cavité de moulage (14), le moule comprenant au moins un poussoir (21), ledit poussoir étant logé dans un premier bloc (11) de ladite pluralité, d'un côté donnant sur la cavité de moulage (14), et présentant une première surface (S1) affleurant à la cavité de moulage (14), le moule comprenant en outre des moyens d'actionnement (23, 25) permettant la mise en mouvement du poussoir (21) par rapport au bloc (11) dans lequel il est logé, et des moyens d'étanchéité (19, 27) isolant les moyens d'actionnement (23, 25) de la cavité de moulage (14), dans lequel, lorsque les blocs (11, 13) sont en position assemblée, une deuxième surface (S2) dudit poussoir est en contact avec un deuxième bloc (13) différent du premier bloc (11) et dans lequel les moyens d'actionnement (23, 25) sont accessibles par ladite deuxième surface (S2) du poussoir ;
- injecter un matériau dans la cavité de moulage (14) pour former la pièce (15) ;
- ouvrir la cavité de moulage en séparant au moins un bloc (13) de ladite pluralité, différent du premier bloc (11), du reste du moule ;
- actionner les moyens d'actionnement (23, 25), ce par quoi le poussoir (21) est mis en mouvement par rapport au premier bloc (11) et le poussoir (21) exerce un effort sur la pièce (15) pour séparer la pièce du moule (10).

## Patentansprüche

1. Form (10), insbesondere Spritzgussform, umfassend eine Vielzahl von Blöcke (11, 13), die in montierter Position einen Formhohlraum (14) definieren, und mindestens einen Kolben (21), wobei der Kolben (21) so konfiguriert ist, dass er in einem ersten Block (11) der Vielzahl auf einer Seite, die dem Formhohlraum (14) zugewandt ist, untergebracht ist, und dass er eine erste Oberfläche (S1) aufweist, die mit dem Formhohlraum (14) bündig ist, wenn der Kolben (21) in dem ersten Block (11) untergebracht ist, wobei die Form (10) ferner Betätigungsmittel (23, 25) zum Bewegen des Kolbens (21) relativ zu dem ersten Block (11) und Dichtungsmittel (19, 27) umfasst, die so konfiguriert sind, dass sie die Betätigungsmittel (23, 25) von dem Formhohlraum (14) isolieren, wobei, wenn die Blöcke (11, 13) sich in montierter Position befinden, eine zweite Oberfläche (S2) des Kolbens in Kontakt mit einem zweiten Block (13) steht, der sich von dem ersten Block (11) unterscheidet, und die Betätigungsmittel (23, 25) durch die zweite Oberfläche (S2) des Kolbens zugänglich sind.

2. Form gemäß Anspruch 1, wobei die Dichtungsmittel (19, 27) auf einer dem Formhohlraum (14) nicht zugewandten Fläche vorgesehen sind.

3. Form gemäß Anspruch 1 oder 2, wobei die Betätigungsmittel (23, 25) auf der dem Formhohlraum zugewandten Seite zugänglich sind.

4. Form gemäß einem der Ansprüche 1 bis 3, wobei der Kolben (21) ein Gewinde (23) aufweist und die Betätigungsmittel eine Schraube (25) umfassen, die in das Gewinde eingreift.

5. Form gemäß einem der Ansprüche 1 bis 4, wobei die Dichtungsmittel (19, 27) einen O-Ring umfassen, der so konfiguriert ist, dass er zwischen dem Kolben (21) und einem Block (11, 13) der Vielzahl angeordnet ist.

6. Verfahren zur Herstellung eines Teils (15) durch Spritzgießen, umfassend die folgenden Schritte:
- Bereitstellen einer Form (10) mit einer Vielzahl von Blöcken (11, 13), die in montierter Position einen Formhohlraum (14) definieren, wobei die Form mindestens einen Kolben (21) aufweist, wobei der Kolben (21) in einem ersten Block (11) der Vielzahl auf einer Seite, die dem Formhohlraum (14) zugewandt ist, untergebracht ist, und eine erste Oberfläche (S1) aufweist, die mit dem Formhohlraum (14) bündig ist, wobei die Form ferner Betätigungsmittel (23, 25) zum Bewegen des Kolbens (21) relativ zu dem ersten Block (11), in dem er untergebracht ist, und Dichtungsmittel (19, 27) umfasst, die die Betätigungsmittel (23, 25) von dem Formhohlraum (14) isolieren, wobei, wenn die Blöcke (11, 13) sich in montierter Position befinden, eine zweite Oberfläche (S2) des Kolbens in Kontakt mit einem zweiten Block (13) steht, der sich von dem ersten Block (11) unterscheidet, und wobei die Betätigungsmittel (23, 25) durch die zweite Oberfläche (S2) des Kolbens zugänglich sind,
- Einspritzen eines Materials in den Formhohlraum (14), um das Teil (15) zu bilden,
- Öffnen des Formhohlraums durch Trennen mindestens eines Blocks (13) der Vielzahl, der sich von dem ersten Block (11) unterscheidet, von dem Rest der Form,
- Betätigen der Betätigungsmittel (23, 25), wodurch der Kolben (21) in Bezug auf den ersten Block (11) in Bewegung gesetzt wird und der Kolben (21) eine Kraft auf das Teil (15) ausübt, um das Teil von der Form (10) zu trennen.

## Claims

1. A mold (10), in particular an injection mold, comprising a plurality of blocks (11, 13) that, in an assembled position, define a mold cavity (14), the mold being **characterized in that** it includes at least one pusher (21), said pusher (21) being configured to be housed in a first block (11) of said plurality, in a side facing the mold cavity (14), and to present a first surface (S1) flush with the mold cavity (14) when the pusher (21) is housed in said first block (11), **in that** the mold (10) also includes actuator means (23, 25) enabling the pusher (21) to be moved relative to the first block (11), and sealing means (19, 27) configured to isolate the actuator means (23, 25) from the mold cavity (14), **in that**, when the blocks (11, 13) are in the assembled position, a second surface (S2) of said pusher is in contact with a second block (13) other than the first block (11), and **in that** the actuator means (23, 25) are accessible via said second surface (S2) of the pusher.

2. A mold according to claim 1, wherein the sealing means (19, 27) are provided on a surface that does not face the mold cavity (14).

3. A mold according to claim 1 or claim 2, wherein the actuator means (23, 25) are accessible from a side facing the mold cavity.

4. A mold according to any one of claims 1 to 3, wherein the pusher (21) includes a thread (23) and the actuator means comprise a screw (25) engaged in said thread.

5. A mold according to any one of claims 1 to 4, wherein, the sealing means (19, 27) comprise an o-ring configured to be arranged between the pusher (21) and one of the blocks (11, 13) of said plurality.

6. A method of fabricating a part (15) by injection molding, the method being **characterized in that** it comprises the following steps:
• providing a mold (10) having a plurality of blocks (11, 13) that, when in an assembled position, define a mold cavity (14), the mold including at least one pusher (21), said pusher being housed in a first block (11) of said plurality in a side facing the mold cavity (14), and presenting a first surface (S1) flush with the mold cavity (14), the mold also including actuator means (23, 25) enabling the pusher (21) to be moved relative to the block (11) in which it is housed, and sealing means (19, 27) isolating the actuator means (23, 25) from the mold cavity (14),
wherein, when the blocks (11, 13) are in the assembled position, a second surface (S2) of said pusher is in contact with a second block (13) other than the first block (11), and **in that** the actuator means (23, 25) are accessible via said second surface (S2) of the pusher;
• injecting a material into the mold cavity (14) in order to form the part (15);
• opening the mold cavity by separating at least one block (13) of said plurality and other than the first block (11) from the remainder of the mold; and
• actuating the actuator means (23, 25) to cause the pusher (21) to move relative to the first block (11) so that the pusher (21) exerts a force on the part (15) in order to separate the part from the mold (10).
